# EUROPÄISCHE PATENTSCHRIFT

(11) **EP 0 934 964 B1**
(45) Veröffentlichungstag und Bekanntmachung des Hinweises auf die Patenterteilung: **07.04.2004**
(21) Anmeldenummer: 99101269.1
(22) Anmeldetag: 23.01.1999
(51) Int. Cl.: C08G 18/78, C08G 18/08, C09D 175/14, C08F 283/00

(54) **Allophanatgruppen enthaltende Polyurethan-Polyacrylat-Hybriddispersionen**
Polyurethane-polyacrylate hybrid dispersions containing allophanate groups
Dispersions hybrides de polyuréthane-polyacrylate contenant des groupements allophanate

(30) Priorität: 05.02.1998 DE 19804432
(43) Veröffentlichungstag der Anmeldung: 11.08.1999
(73) Patentinhaber: Bayer MaterialScience AG, 51368 Leverkusen (DE)
(72) Erfinder: Irle, Christoph, Dr., 47800 Krefeld (DE); Blum, Harald, Dr., 51375 Leverkusen (DE); Brahm, Martin, Dr., 51519 Odenthal (DE); Kremer, Wolfgang, 47647 Kerken (DE); Roschu, Rolf, 47877 Willich (DE); Lühmann, Erhard, 51375 Leverkusen (DE); Pedain, Dr. Josef, 51061 Köln (DE); Wamprecht, Dr. Christian, 41472 Neuss (DE)

(56) Entgegenhaltungen:
- EP-A- 0 705 855
- EP-A- 0 807 623
- US-A- 4 160 080
- US-A- 5 380 792

## Beschreibung

Die Erfindung beschreibt Allophanatgruppen enthaltende Polyurethan-Polyacrylat-Hybriddispersionen, ein Verfahren zur Herstellung derartiger Dispersionen und ihre Verwendung für Holz- und Möbellacke mit guter Beständigkeit gegen färbende Flüssigkeiten.

Mit dem Ziel, die Emissionen organischer Lösemittel zu senken, werden zunehmend wäßrige Beschichtungsmittel an Stelle lösemittelhaltiger Systeme eingesetzt. Wichtige Klassen wäßriger Lackbindemittel sind die Polyurethan-Dispersionen und die Polyacrylat-Dispersionen. Die verschiedenen Möglichkeiten zur Herstellung von Polyurethan-Dispersionen wurden z.B. von D. Dieterich in einem Übersichtsartikel zusammengefaßt (D. Dieterich, Prog. Org. Coatings 9, 281 (1981)). Zur Einstellung hochwertiger Oberflächeneigenschaften werden Polyurethan-Dispersionen und Poly-acrylat-Dispersionen oft gemischt. Solche Mischungen sind beispielsweise in US-A-5 380 792, EP-A-0 807 623 und US-A-4 160 080 offenbart.

Besonders aus der Patentliteratur ist ferner bekannt, in Gegenwart wäßriger Polyurethan-Dispersionen eine radikalische Polymerisation geeigneter Vinylmonomere durchzuführen. Beispielhafte Patentanmeldungen zur Herstellung solcher Polyurethan-Polyacrylat-Hybriddispersionen sind z.B. DE-A-1 953 348 und die EP-A 167 188, EP-A 189 945 und EP-A 308 115. Im Vergleich zu einer Mischung von Polyurethanund Polyacrylat-Dispersionen werden so höherwertige Lackbindemittel erhalten.

Durch den Einsatz moderner Technologien ist es gelungen, die Leistungsfähigkeit wäßriger Beschichtungen deutlich zu steigern. So wird zum Beispiel in der Europäischen Patentschrift 358 979 beschrieben, daß die Beständigkeiten von Lackfilmen aus wäßrigen Acrylat-Dispersionen durch Zusatz von Polyisocyanaten verbessert werden. Weiterhin ist es möglich, lacktechnische Eigenschaften von Polyurethandispersionen durch Zusatz hydrophilierter Polyisocyanatvernetzer zu verbessern (z.B. EP-A 469 389).

Neben der Entwicklung derartiger 2K-Systeme wird versucht, eine deutliche Verbesserung der Lackeigenschaften auch bei den einfacher zu applizierenden einkomponentigen Systemen zu erreichen. So wird in der EP-A 332 326 beschrieben, daß Polyurethan-Polyacrylat-Hybriddispersionen durch Kondensationsreaktion von Hydrazid- und Carbonylgruppen vernetzt werden können. Auch die oxidative Vernetzung von Polyurethan- und Polyurethan-Polyacrylat-Hybriddispersionen ist bekannt (Advances in Urethane Science and Technology, Bd. 10, S. 121-162 (1987), 4^{th} Nürnberg Congress "Creative Advances in Coatings Technology" , Paper 17, (1997)).

Durch die beschriebenen Verfahrensschritte können die Lackeigenschaften etwas verbessert werden, aber die chemischen Beständigkeiten von Lackfilmen aus Polyurethan-Polyacrylat-Hybriddispersionen zeigen besonders gegen färbende Flüssigkeiten ein unzureichendes Niveau.

Aufgabe der vorliegenden Erfindung war es daher, die Eigenschaften von einkomponentig zu applizierenden wäßrigen Lacken aus Polyurethan-Polyacrylat-Hybriddispersionen zu verbessern und vor allem die Anforderungen bezüglich der Beständigkeiten gegen färbende Flüssigkeiten zu erfüllen.

Überraschend wurde nun gefunden, daß Beschichtungen aus Polyurethan-Polyacrylat-Hybriddispersionen auf Basis spezieller, Allophanatgruppen enthaltender Polyurethandispersionen eine entscheidende Verbesserung dieser Beständigkeit aufweisen.

Gegenstand der Erfindung sind Polyurethan-Polyacrylat-Hybriddispersionen aus
A) 20 - 99 Gew.-% (bezogen auf den Gesamtfestkörpergehalt) eines Polyurethans auf Basis aliphatischer oder cycloaliphatischer Polyisocyanate mit Allophanatgruppen und
B) 80 - 1 Gew.-% (bezogen auf den Gesamtfestkörpergehalt) eines Vinylpolymerisats sowie Wasser und ggf. ein organisches Lösemittel, wobei gilt, daß sich die Komponenten A und B zu 100 Gew.-% addieren.

Bevorzugt enthalten die Polyurethan-Polyacrylat- Hybriddispersionen Polyurethane A, die hergestellt werden aus
A1) einer aliphatischen oder cycloaliphatischen Polyisocyanatkomponente mit einem Allophanatgruppengehalt von 5 - 35 %, besonders bevorzugt 11 - 27 % (berechnet als Gewichtsanteil der Allophanatgruppe 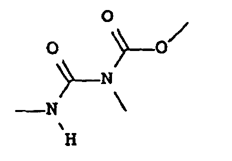 [Molgewicht 101 g] bezogen auf die Gesamteinwaage der Polyisocyanatkomponente),
A2) einer aktiven Wasserstoff enthaltenden Komponente, die mindestens eine polymere Verbindung mit einer OH-Zahl von 30 - 200 mg KOH/ g und einem Molekulargewicht im Bereich von 500 - 6000 umfaßt,
A3) einem oder mehreren niedermolekularen Polyolen und / oder Polyaminen mit einem mittleren Molekulargewicht unter 500 und
A4) einer aktiven Wasserstoff enthaltenden Komponente mit mindestens einer ionischen oder potentiell ionischen Gruppe.

Geeignete Polyisocyanatkomponenten A1) werden bevorzugt durch Reaktion von aliphatischen oder cycloaliphatischen Diisocyanaten der Formel R¹(NCO)₂, mit einem aliphatischen oder cycloaliphatischen Alkohol R²OH in Gegenwart eines Katalysators hergestellt. Dabei kann R¹ einen aliphatischen Kohlenwasserstoffrest mit 4 - 12 Kohlenstoffatomen oder einen cycloaliphatischen Kohlenwasserstoffrest mit 6 - 15 Kohlenstoffatomen bedeuten. Beispiele derartiger Diisocyanate R¹(NCO)₂ sind Tetramethylendiisocyanat, Hexamethylendiisocyanat oder Diisocyanatocyclohexan, 1-Methyl-2,4-isocyanatocyclohexan oder 1-Methyl-2,6-isocyanatocyclohexan. Bevorzugt einzusetzende Diisocyanate sind 1-Isocyanato-3,3,5-trimethyl-5-isocyanatomethylcyclohexan (Isophorondiisocyanat) und Methylen-bis-(4-isocyanatocyclohexan).

Ebenfalls geeignet sind Mischungen der genannten und anderer Diisocyanate R¹(NCO)₂. Die Alkoholkomponente R²OH umfaßt aliphatische oder cycloaliphatische Alkohole, bevorzugt Monoalkohole, mit 1 - 18, bevorzugt 4 - 12 C-Atomen, die durch Sauerstoffatome unterbrochen sein können. Geeignete Alkoholkomponenten R²OH sind beispielsweise Ethanol, *n*-Propanol, Isopropanol, *n*-Butanol, *n*-Pentanol, Isopentanol, 2-Ethylhexanol, Hexadecanol, Ethylenglykol-monobutylether, Diethylenglykol-monobutylether, Methoxypropanol, Polyether mit einer OH-Funktionalität oder Diole wie z.B. Ethylenglykol oder Butandiol.

Die Überführung von Diisocyanat R¹(NCO)₂ und Alkoholkomponente R²OH in Allophanatgruppen aufweisende Polyisocyanatkomponenten A1) erfolgt auf die in der Literatur beschriebene Weise: Zum Beispiel kann man so vorgehen, daß Polyisocyanat und ein geeigneter Katalysator vorgelegt werden und die Alkoholkomponente zudosiert wird. Alternativ kann aus Polyisocyanat und Alkohol zunächst ein Urethan hergestellt werden, das dann nach Zugabe des Katalysators weiter zum Allophanat umgesetzt wird.

Geeignete Reaktionsbedingungen und Katalysatoren sind z.B. in den EP-A 712 840, EP-A 682 012, GB-A 994 890 oder EP-A 659 791 beschrieben. Bevorzugt einzusetzende Katalysatoren sind Zinn oder Zink enthaltende Verbindungen wie Dibutylzinndilaurat, Zinn-2-Ethylhexanoat, Zink-Acetylacetonat oder Zink-2-Ethylhexanoat.

Allophanatgruppen enthaltende Polyisocyanatkomponenten A1) werden z.B. hergestellt aus 75 - 98 Gew.-%, bevorzugt 80 - 92 Gew.-% (bezogen jeweils auf Gesamtgewicht der Polyisocyanatkomponente A1) aliphatischen oder cycloaliphatischen Polyisocyanaten und 2 - 25 Gew.-%, bevorzugt 8 - 20 Gew.-% (bezogen jeweils auf Gesamtgewicht der Polyisocyanatkomponente A1) aliphatischen oder cycloaliphatischen Alkoholen in Gegenwart einer geeigneten Menge Katalysator.

Der so hergestellten Allophanatgruppen enthaltenden Polyisocyanatkomponente A1) können Allophanatgruppen-freie Polyisocyanate zugemischt werden.

Die polymeren Verbindungen A2) in dem Molgewichtsbereich von 500 - 6000 sind die üblichen wie sie für Polyurethane bereits seit langem eingesetzt werden mit einer OH-Zahl von 30 - 200 mg KOH/g wie zum Beispiel Polyester, Polyesteramide, Polyether, Polythioether, Polycarbonate, Polyacetale, Polyolefine, Polysiloxane und Epoxidharze. Die polymeren Verbindungen A2 können ungesättigte Gruppen enthalten.

Bevorzugt eingesetzt werden Polyether-, Polycarbonat- und Polyesterdiole. Besonders bevorzugt verwendet werden Polyole in einem Molgewichtsbereich von 600 - 2500 mit einer OH-Funktionalität von 1,9 - 3.

Neben Polyolen bzw. Polyaminen können auch Polyoxialkylenether mit einem Molgewicht von 250 - 3000, die pro Molekül eine oder mehrere OH-Gruppen, bevorzugt eine OH-Gruppe, tragen und z.B. aus Ethylenoxid und Propylenoxid aufgebaut werden, in das Polyurethan eingebaut werden. Es ist bekannt, daß diese Substanzen Hydrophilieträger sind und die Dispergierbarkeit des Polyurethans in Wasser verbessern.

Polyole, Aminopolyole oder Polyamine A3) mit einem Molgewicht unter 500, die als Kettenverlängerer in Polyurethanen bzw. Polyurethan-Dispersionen Verwendung finden können, sind in der entsprechenden Literatur ebenfalls in großer Zahl beschrieben. Als Beispiel seien genannt: Ethandiol, Butandiol-1,4, Cyclohexandimethanol, Neopentylglykol, Trimethylolpropan, Glycerin sowie Ethylendiamin, 1,4-Diaminobutan, Isophorondiamin, Diethylentriamin, Triethylentetramin, Hydrazin und Polyoxypropylenamine (Jeffamine ®- Polyamine).

Weiterhin ist es möglich, einen Teil der Isocyanatgruppen mit ungesättigten Alkoholkomponenten umzusetzen. Beispiele für solche ungesättigte Alkohole sind Hydroxyethylacrylat, Hydroxyethylmethacrylat, Trimethylolpropan-mono- oder diallylether oder Allylalkohol. Bei der nachfolgenden radikalischen Polymerisation dienen die so in das Polyurethan eingebrachten Doppelbindungen als Pfropfstelle.

Niedermolekulare Verbindungen A4), die zur Ausbildung einer ionischen Gruppe befähigt sind, sind z.B. Dimethylolpropionsäure und N-Methyl-diethanolamin.

Die Herstellung der wäßrigen PUR-Dispersionen erfolgt in der bekannten üblichen Art: Nach Herstellung der Allophanatgruppen enthaltenden Polyisocyanatkomponente A1) läßt man in einem 2. Reaktionsschritt das Gemisch aus Allophanatgruppen enthaltendem Diisocyanat und monomerem Diisocyanat mit polymerem Polyol und mit niedermolekularen Kettenverlängerern (bevorzugt einer oder mehreren OH-funktionellen Verbindungen mit einem Molgewicht unter 500 und einer mittleren Funktionalität von 1,8 - 2,5), zu einem Polyurethan ausreagieren, wobei ggf. und vorteilhaft ein Lösungsmittel mitverwendet wird, das später ggf. wieder abgetrennt werden kann.

In einem 3. Schritt werden anschließend zur Neutralisation befähigte Gruppen versalzen und mit Wasser die Dispersion erzeugt. Eventuell noch vorhandene restliche NCO-Gruppen reagieren dann entweder mit Wasser bzw. vor, während oder nach Dispergierung zugefügten Kettenverlängerern, bevorzugt niedermolekulare Polyamine, ab. Bei Mitverwendung eines leichtsiedenden Lösemittels kann dieses durch Destillation wieder abgetrennt und zurückgewonnen werden.

Je nach Anteil hydrophiler Gruppen kann die Dispersion sehr feinteilig eingestellt werden, so daß sie praktisch das Aussehen einer Lösung hat, aber auch sehr grobteilige Einstellungen sind möglich, die ebenfalls ausreichend stabil sind. Auch der Feststoffgehalt kann in weiten Grenzen von z.B. 20 - 50 Gew.-% variiert werden.

Die so hergestellte Allophanat-Gruppen enthaltende Polyurethan-Dispersion wird in einem zweiten Schritt mit einem Polyacrylat-Polymerisat B modifiziert (Herstellung einer Hybriddispersion). Dabei verfährt man so daß die Herstellung der Polyacrylat-Dispersion durch radikalische Emulsionspolymerisation in Gegenwart der Polyurethan-Dispersion erfolgt.

Die Menge an polymerisierbaren Monomeren beträgt, bezogen auf den Gesamt-Festgehalt der Polyurethan-Polyacrylat- Hybriddispersion, 80 - 1 Gew.-%, bevorzugt 60 - 10 Gew.-%.

Geeignete Monomere können z.B. sein: Styrol, (Meth)acrylsäureester mit 1 - 18 C-Atomen im Alkoholrest wie Methylmethacrylat, Butylmethacrylat, Ethylacrylat, Butylacrylat, Cyclohexylacrylat, 2-Ethylhexylacrylat, Stearylacrylat, Di(meth)acrylsäureester von Diolen, z.B. Ethylenglykol, 1,4-Butandiol, 1,6-Hexandiol, außerdem (Meth)acrylsäureamid oder (Meth)acrylsäurenitril sowie Vinlyester aliphatischer Carbonsäuren mit 2 - 12 C-Atomen, z.B. Vinylacetat oder Versaticsäure-vinylester. Ebenfalls kommen solche Monomere in Frage, die funktionelle Gruppen, zum Beispiel Hydroxy-, Carbonyl- oder Säuregruppen tragen, z.B. Hydroxyethylacrylat, Hydroxyethylmethacrylat, Hydroxypropylmethacrylat, Acetoacetoxyethylmethacrylat, Acrylsäure oder Methacrylsäure. Bevorzugt werden keine Säure-funktionellen Monomere in die Polymerisation einbezogen.

Die Polymerisation wird bevorzugt nach dem Verfahren der wäßrigen Emulsionspolymerisation durchgeführt. Beispielsweise kann man dabei folgendermaßen vorgehen:

Es wird eine durch Radikalstarter initiierte Emulsionscopolymerisation der oben genannten Monomeren durchgeführt. Bevorzugt wird diese Emulsionspolymerisation in Gegenwart der Polyurethan-Dispersion A durchgeführt. Die Durchführung der Emulsionspolymerisation kann entweder auf die Weise erfolgen, daß man die Polyurethan-Dispersion und/oder eine oberflächenaktive Substanz vorlegt und dann die Monomeren und den Initiator über einen bestimmten Zeitraum, z.B. zwischen 0,5 und 6 Stunden, getrennt zudosiert, oder aber, daß man einen Teil der Polyurethan-Dispersion und/oder eine oberflächenaktive Substanz vorlegt und den Rest zusammen mit den Monomeren und den Initiator in getrennten Mengenströmen ebenfalls über einen Zeitraum von z.B. 0,5 - 6 h zudosiert. Es kann aber auch so verfahren werden, daß über den gesamten Zeitraum der Polymerisation Polyurethan-Dispersion und/oder eine oberflächenaktive Substanz, Monomere und Initiator getrennt und kontinuierlich zudosiert werden und nur eine bestimmte Menge an Wasser vorgelegt wird. Diese Art der Polymerisation eignet sich auch zur Durchführung einer batch-Fahrweise, d. h. Polyurethan-Dispersion und/oder eine oberflächenaktive Substanz, Monomerengemisch und Initiator werden zusammen vorgelegt, auf die gewünschte Polymerisationstemperatur erhitzt und zwischen 2 und 10 h bei dieser Temperatur gehalten.

Als Initiatoren eignen sich z.B. Peroxide wie Kaliumperoxodisulfat, Ammoniumperoxodisulfat, organische Peroxide, organische Hydroperoxide, Wasserstoffperoxid. Bevorzugt werden Redox-Systeme wie wasserlösliche, Radikale liefernde nichtionogene Peroxide, z.B. *t*-Butylhydroperoxid als Oxidationskomponente und Reduktionskomponenten wie z.B. Formaldehydsulfoxylat oder Ascorbinsäure, katalytischen Mengen eines Eisen (II)-Salzes (ca. 10⁻⁴ bis 10⁻¹ mol), eingesetzt.

Die Emulsionspolymerisation erfolgt im allgemeinen bei Temperaturen zwischen 20°C und 100°C, bevorzugt zwischen 40°C und 65°C.

Nach Beendigung der Polymerisationsreaktion auf die beispielhaft beschriebene Art erhält man eine feinteilige wäßrige Polymeremulsion mit einem durch Laser-Korrelationsspektroskopie gemessenen mittleren Teilchendurchmesser zwischen 15 und 350 nm, vorzugsweise zwischen 30 und 150 nm.

Die Dispersion enthält neben Homo- und/oder Copolymeren der zur Polymerisation eingesetzten Monomeren oder Monomergemischen auch Anteile von Pfropfprodukten der Monomeren, die entweder auf Doppelbindungen (über den Einbau ungesättigter OH-Komponenten eingebracht) oder auf die Polymerketten des Polyurethans als Pfropfgrundlage aufgepfropft sind. Solche Pfropfreaktionen sind bekannt z.B. [Fortschritte der Hochpolymer-Forschung **1**, 300 (1959), DE 1953348].

Die erfindungsgemäßen Polyurethan-Polyacrylat- Hybriddispersionen können als Bindemittel in wäßrigen Lacken eingesetzt werden. Zur weiteren Verbesserung der Eigenschaften können solchen Lacken vor Applikation auch Polyisocyanate in Mengen bis zu 25 Gew.-%, vorzugsweise bis 15 Gew.-% (bezogen auf Festgehalt der Polyurethan-Polyacrylat- Hybriddispersion) zugesetzt werden. Geeignete Polyisocyanate können sein: hydrophilierte Polyisocyanate wie z.B. Bayhydur ® 3100 (Bayer AG) oder auch hydrophobe Polyisocyanate wie z.B. Desmodur @ 3300, Desmodur ® 3400 oder Desmodur ® VP LS 2025 (Bayer AG).

Weiterhin können die erfindungsgemäßen Polyurethan-Polyacrylat- Hybriddispersionen zusammen mit weiteren Bindemitteln, wie z.B. wasserdispergierbaren Alkydharzen, Polyurethan-, Polyacrylat- oder Polybutadienöldispersionen eingesetzt werden.

Bevorzugt werden die erfindungsgemäßen Polyurethan-Polyacrylat-Hybriddispersionen für Beschichtungen eingesetzt, besonders bevorzugt bei der Holz- und Kunststoffbeschichtung.

### Beispiele

### I. Allophanatgruppen enthaltende Polyisocyanatkomponente A1:

### I.a Allophanatgruppen enthaltende Polyisocyanatkomponente A1 aus Methylenbis-(4-isocyanatocyclohexan) und n-Butanol

914 g Methylen-bis-(4-isocyanatocyclohexan) (Desmodur ® W, Bayer AG) und 0,5 g Desmorapid ® SO (Bayer AG) werden auf 60°C aufgeheizt. Innerhalb von 25 min werden dann unter exothermer Reaktion 86 g *n*-Butanol zudosiert. Die Temperatur wird während der Zugabe durch Kühlung auf 110°C eingestellt. Anschließend wird bei einer Temperatur von 110°C gerührt. Nach 7 h ist ein NCO-Gehalt von 19,7 % erreicht. Der berechnete Allophanatgruppen-Gehalt der Polyisocyanatkomponente beträgt 11,7 Gew.-%.

### I.b Allophanatgruppen enthaltende Polyisocyanatkomponente A1 aus Isophorondiisocyanat und n-Butanol

1332 g Isophorondiisocyanat und 0,074 g Isophthalsäuredichlorid werden auf 60°C aufgeheizt. Innerhalb von 30 min werden dann unter exothermer Reaktion 148 g *n*-Butanol und 0,74 g Zink-2-ethylhexanoat zudosiert. Die Temperatur wird während der Zugabe durch Kühlung auf 90°C eingestellt. Anschließend wird bei einer Temperatur von 90°C gerührt. Nach 18 h ist ein NCO-Gehalt von 22,9 % erreicht. Der berechnete Allophanatgruppen-Gehalt der Polyisocyanatkomponente beträgt 13,6 Gew.-%.

### I.c Allophanatgruppen enthaltende Polyisocyanatkomponente A1 aus Isophorondiisocyanat/Methylen-bis-(4-isocyanatocyclohexan) und n-Butanol

222,3 g Isophorondiisocyanat, 262 g Methylen-bis-(4-isocyanatocyclohexan) (Desmodur ® W, Bayer AG) und 0,4 g Desmorapid ® SO (Bayer AG) werden auf 60°C aufgeheizt. Innerhalb von 30 min werden dann unter exothermer Reaktion 74 g *n*-Butanol zudosiert. Der Ansatz wird auf 110 °C aufgeheizt. Anschließend wird bei einer Temperatur von 110 °C gerührt. Nach 6 h ist ein NCO-Gehalt von 14,4. Der berechnete Allophanatgruppen-Gehalt der Polyisocyanatkomponente beträgt 18,1 Gew.-%.

### I.d Allophanatgruppen enthaltende Polyisocyanatkomponente A1 aus Hexamethylendiisocyanat/ Isophorondiisocyanat und n-Butanol

336 g Hexamethylendiisocyanat und 268 g N-Methylpyrrolidon werden auf 60°C aufgeheizt. Innerhalb von 30 min werden 296 g *n*-Butanol zugegeben. Durch die exotherme Reaktion wird der Ansatz aufgeheizt. Die Temperatur wird während der Zugabe durch Kühlung auf 100 °C eingestellt. Nach beendeter Zugabe wird noch weitere 5 h bei 100 °C gehalten (NCO-Gehalt < 0,1 %). Nun werden weitere 238 g N-Methylpyrrolidon, 3,8 g Zink-2-ethylhexanoat, 0,4 g Isophthalsäuredichlorid und 888 g Isophorondiisocyanat zugegeben und der Ansatz auf 90°C aufgeheizt. Nach 7 h ist ein NCO-Gehalt von 8,0 % erreicht. Der berechnete Allophanatgruppen-Gehalt der Polyisocyanatkomponente beträgt 26,6 Gew.-%.

### II. Polyurethandispersionen

### II.a Polyurethandispersion auf Basis der Vorstufe I.a

In einem 21-Vierhalskolben werden 286 g Poly(tetrahydrofuran), 41 g Cyclohexandimethanol, 58 g Dimethylolpropionsäure und 413 g N-Methylpyrrolidon auf 70°C aufgeheizt. Sobald eine klare Lösung entstanden ist, werden 659 g der Vorstufe I.a zugegeben. Der Ansatz wird 2 h bei 100°C gehalten (NCO-Gehalt 3,2 %). Nach Abkühlen auf 80°C werden 44 g Triethylamin zugegeben und 30 min unter Rühren homogenisiert. Von der so hergestellten Präpolymerlösung werden 1250 g unter Rühren in einen zweiten Kolben, in dem 1537 g Wasser (Temperatur 40°C) vorgelegt sind, gegeben. Dann werden 10 g Ethylendiamin und 11 g Diethylentriamin, gelöst in 171 g Wasser, innerhalb von 30 min zugegeben. Anschließend wird filtriert. Das Produkt ist eine Polyurethan-Dispersion mit folgenden Kennzahlen:

| | |
|---|---|
| Mittlere Teilchengröße (aus der Laserkorrelationsspekroskopie, LKS) | 25 nm |
| Festgehalt | 34,2 % |
| pH-Wert | 8,2 |

### II.b Vergleichsbeispiel: Polyurethandispersion (ähnlich II.a, jedoch auf Basis eines Allophanatgruppen-freien Diisocyanats)

In einem 21-Vierhalskolben werden 275 g Poly(tetrahydrofuran), 54 g Cyclohexandimethanol, 42 g Dimethylolpropionsäure und 301 g N-Methylpyrrolidon auf 70°C aufgeheizt. Sobald eine klare Lösung entstanden ist, werden 389 g Methylen-bis-(4-isocyanatocyclohexan) (Desmodur ® W, Bayer AG) zugegeben. Der Ansatz wird 2 h bei 100°C gehalten (NCO-Gehalt 4,6 %). Nach Abkühlen auf 50°C werden 41 g Triethylamin zugegeben und 30 min unter Rühren homogenisiert. Von der so hergestellten Präpolymerlösung werden 900 g unter Rühren in einen zweiten Kolben, in dem 831 g Wasser (Temperatur 40 °C) vorgelegt sind, gegeben. Dann werden 9 g Ethylendiamin und 10 g Diethylentriamin, gelöst in 92 g Wasser, innerhalb von 30 min zugegeben. Anschließend wird filtriert. Das Produkt ist eine Polyurethan-Dispersion mit folgenden Kennzahlen:

| | |
|---|---|
| Mittlere Teilchengröße (LKS) | 36 nm |
| Festgehalt | 37,1 % |
| pH-Wert | 7,8 |

### II.c Vergleichsbeispiel: Polvurethandispersion (ähnlich II.b, jedoch höherer Hartsegmentanteil)

In einem 21-Vierhalskolben werden 196 g Poly(tetrahydrofuran), 28 g Cyclohexandimethanol, 33 g Ethylenglykol, 40 g Dimethylolpropionsäure und 276 g N-Methylpyrrolidon auf 70°C aufgeheizt. Sobald eine klare Lösung entstanden ist, werden 414 g Methylen-bis-(4-isocyanatocyclohexan) (Desmodur ® W, Bayer AG) zugegeben. Der Ansatz wird 3 h bei 100°C gehalten (NCO-Gehalt 3,9 %). Nach Abkühlen auf 50°C werden 30 g Triethylamin zugegeben und 30 min unter Rühren homogenisiert. Von der so hergestellten Präpolymerlösung werden 850 g unter Rühren in einen zweiten Kolben, in dem 794 g Wasser (Temperatur 40°C) vorgelegt sind, gegeben. Dann werden 7 g Ethylendiamin und 8 g Diethylentriamin, gelöst in 92 g Wasser, innerhalb von 30 min zugegeben. Anschließend wird filtriert. Das Produkt ist eine Polyurethan-Dispersion mit folgenden Kennzahlen:

| | |
|---|---|
| Mittlere Teilchengröße (LKS) | 26 nm |
| Festgehalt | 37,1 % |
| pH-Wert | 7,8 |

### II.d Polyurethandispersion auf Basis der Vorstufe I.b

In einem 21-Vierhalskolben werden 196 g Poly(tetrahydrofuran), 32 g Cyclohexandimethanol, 36 g Dimethylolpropionsäure und 259 g N-Methylpyrrolidon auf 70°C aufgeheizt. Sobald eine klare Lösung entstanden ist, werden 389 g der Vorstufe I.b zugegeben. Der Ansatz wird 2 h bei 100°C gehalten (NCO-Gehalt 3,7 %). Nach Abkühlen auf 55°C werden 27 g Triethylamin zugegeben und 30 min unter Rühren homogenisiert. Von der so hergestellten Präpolymerlösung werden 800 g unter Rühren in einen zweiten Kolben, in dem 743 g Wasser (Temperatur 40°C) vorgelegt sind, gegeben. Dann werden 7 g Ethylendiamin und 8 g Diethylentriamin, gelöst in 82 g Wasser, innerhalb von 30 min zugegeben. Anschließend wird filtriert. Das Produkt ist eine Polyurethan-Dispersion mit folgenden Kennzahlen:

| | |
|---|---|
| Mittlere Teilchengröße (LKS) | 41 nm |
| Festgehalt | 35,9 % |
| pH-Wert | 7,6 |

### III. Polyurethan-Polyacrylat- Hybriddispersionen

### III.a Polyurethan-Polyacrylat-Hybriddispersion aus der Polyurethan-Dispersion II.a

2478 g der Polyurethan-Dispersion II.a (entsprechend 847 g Festharz), 733 g Wasser, 4 g einer 1 %-igen Lösung von Eisen (II)-Sulfat in Wasser und 4 g einer 1 %-igen Lösung von Trilon ® B in Wasser werden auf 50 °C erwärmt. Jeweils 25 % der Lösungen I, II, III (siehe unten) werden innerhalb von 5 min unter Rühren zugegeben. Eine leichte Exothermie zeigt den Beginn der Polymerisationsreaktion an. Der Reaktionsansatz wird 30 min bei 50°C gerührt, dann werden die restlichen 75 % der Lösungen I, II, III innerhalb 1 h parallel zudosiert. Man läßt 1 h nachreagieren und kühlt dann auf 25°C ab. Der Ansatz wird filtriert (Filter T5500, Fa. Seitz). Die Dispersion weist folgende Kennzahlen auf:

| | |
|---|---|
| Mittlere Teilchengröße (LKS) | 40 nm |
| Festgehalt | 34,4 % |
| pH-Wert | 7,8 |

| | |
|---|---|
| Lösung I: | 578 g Methylmethacrylat, 272 g Butylacrylat |
| Lösung II: | 3,8 g Na-Formaldehydsulfoxylat, gelöst in 379 g Wasser |
| Lösung III: | 8,5 g *t*-Butylhydroperoxid (70 %-ig in Wasser), gelöst in 425 g Wasser |

### III.b Vergleichsbeispiel: Polyurethan-Polyacrylat-Hybriddispersion aus der Polyurethan-Dispersion II.b

Die Herstellung erfolgt wie unter III.a beschrieben, jedoch wird statt der Polyurethan-Dispersion II.a die Dispersion II.b eingesetzt. Das Endprodukt weist folgende Kennzahlen auf:

| | |
|---|---|
| Mittlere Teitchengföße (LKS) | 46 nm |
| Festgehalt | 36,0 % |
| pH-Wert | 8,5 |

### III.c Vergleichsbeispiel: Polyurethan-Polyacrylat-Hybriddispersion aus der Polyurethan-Dispersion II.c

Die Herstellung erfolgt wie unter III.a beschrieben, jedoch wird statt der Polyurethan-Dispersion II.a die Dispersion II.c eingesetzt. Das Endprodukt weist folgende Kennzahlen auf:

| | |
|---|---|
| Mittlere Teilchengröße (LKS) | 27 nm |
| Festgehalt | 35,5 % |
| pH-Wert | 8,0 |

### III.d Polyurethan-Polyacrylat-Hybriddispersion aus der Polyurethan-Dispersion II.d

Die Herstellung erfolgt wie unter III.a beschrieben, jedoch wird statt der Polyurethan-Dispersion II.a die Dispersion II.d eingesetzt. Das Endprodukt weist folgende Kennzahlen auf:

| | |
|---|---|
| Mittlere Teilchengröße (LKS) | 52 nm |
| Festgehalt | 36,5 % |
| pH-Wert | 8,2 |

### IV.a - d Formulierung von Klarlacken aus den Polyurethan-Polyacrylat- Hybriddispersionen III.a - d

Zur Formulierung eines Klarlackes fügt man zu 100 Gew.-Teilen der Dispersionen III.a - d jeweils folgende Rezepturbestandteile:
Colöser: Butylglykol-Wasser 1:1 (10 Gew.-Teile)
Entschäumer: Tego Foamex ® 805, Lieferform (0,2 Gew.-Teile)
Additiv zur Verbesserung der Untergrundbenetzung: Byk ® 346,
Lieferform (0,5 Gew.-Teile)
Verdicker: Acrysol ® RM8, 5%-ig in Wasser (1,0 Gew.-Teile)

### Prüfung der Klarlacke:

Geprüft wird die Beständigkeit gegen färbende Flüssigkeiten nach DIN 68 861. Die Lacke werden in einer Schichtdicke von 200 µm (Naßfilm) auf eine weiße Pappkarte appliziert. Nach einer Trocknungsdauer von 7 Tagen bei Raumtemperatur wird die Oberfläche für 5 h mit Rotwein bzw. Senf oder für 16 h mit Kaffee benetzt. Anschließend wird abgewischt und nach 3 Tagen die Beschädigung in einer Skala von 0 (keine Veränderung) - 5 (starke Verfärbung) beurteilt.

| | | Beständigkeiten nach DIN 68861: | | |
|---|---|---|---|---|
| Beispiel | Bindemittel | Kaffee | Rotwein | Senf |
| IV.a | Hybriddispersion, Allophanat-modifiziert | 1 | 0 - 1 | 0 - 1 |
| IV.b | Hybriddispersion, Vergleich | 4 | 1 | 1 - 2 |
| IV.c | Hybriddispersion, Vergleich | 3 | 3 | 3 |
| IV.d | Hybriddispersion, Allophanat-modifiziert | 0 | 0 | 2 |

Die Prüfergebnisse zeigen, dass Beschichtungen auf Basis Allophanat-modifizierter Polyurethandispersionen (erfindungsgemäße Versuche IV.a und IV.d) eine deutlich bessere Beständigkeit gegen färbende Flüssigkeiten zeigen als die nach den Vergleichsbeispielen IV.b und IV.c hergestellten.

## Patentansprüche

1. Allophanatgruppen enthaltende Polyurethan-Polyacrylat-Hybriddispersion aus
A) 20 - 99 Gew.-% (bezogen auf den Gesamtfestkörpergehalt) eines ionisch und/oder nichtionisch hydrophilierten Polyurethans auf Basis aliphatischer oder cycloaliphatischer Polyisocyanate mit Allophanatgruppen und
B) 80 - 1 Gew.-% (bezogen auf Gesamtfestkörpergehalt) eines Vinylpolymerisats, das in Gegenwart der Polyurethandispersion A nach dem Verfahren der radikalischen Emulsionspolymerisation hergestellt wird
sowie Wasser und ggf. ein organisches Lösemittel, wobei gilt, daß sich die Komponenten A und B zu 100 Gew.-% addieren.

2. Allophanatgruppen enthaltende Polyurethan-Polyacrylat-Hybriddispersion nach Anspruch 1 **dadurch gekennzeichnet, daß** die Polyurethandispersion A) hergestellt wird aus
A1) einer aliphatischen oder cycloaliphatischen Polyisocyanatkomponente mit einem Allophanatgruppengehalt von 5 - 35 % (berechnet als Gewichtsanteil der Allophanatgruppe 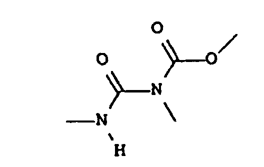 [Molgewicht 101 g] bezogen auf die Gesamteinwaage der Polyisocyanatkomponente),
A2) einer aktiven Wasserstoff enthaltenden Komponente, die mindestens eine polymere Verbindung mit einer OH-Zahl von 30 - 200 mg KOH/g und einem Molekulargewicht im Bereich von 400 - 6000,
A3) ggf. ein oder mehrere niedermolekulare Polyole und / oder Polyamine mit einem mittleren Molekulargewicht unter 400,
A4) einer aktiven Wasserstoff enthaltenden Komponente mit mindestens einer ionischen oder potentiell ionischen Gruppe.

3. Allophanatgruppen enthaltende Polyurethan-Polyacrylat-Hybriddispersion nach Anspruch 1 **dadurch gekennzeichnet, daß** die Polyurethandispersion A) hergestellt wird aus
A1) einer aliphatischen oder cycloaliphatischen Polyisocyanatkomponente mit einem Allophanatgruppengehalt von 11 - 27 % (berechnet als Gewichtsanteil der Allophanatgruppe 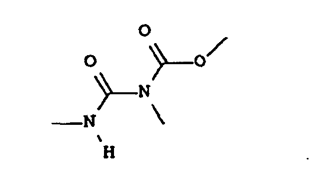 [Molgewicht 101 g] bezogen auf die Gesamteinwaage der Polyisocyanatkomponente),
A2) einer aktiven Wasserstoff enthaltenden Komponente, die mindestens eine polymere Verbindung mit einer OH-Zahl von.30 - 200 mg KOH/g und einem Molekulargewicht im Bereich von 400 - 6000,
A3) ggf. ein oder mehrere niedermolekulare Polyole und / oder Polyamine mit einem mittleren Molekulargewicht unter 400 und
A4) einer aktiven Wasserstoff enthaltenden Komponente mit mindestens einer ionischen oder potentiell ionischen Gruppe.

4. Polyurethan-Polyacrylat-Hybriddispersion gemäß Anspruch 1, **dadurch gekennzeichnet, daß** die polymere Verbindung A2) ein Polyester, Polyether oder Polycarbonat der Molmasse 650 - 2500 und einer Funktionalität von 1,9 - 3 ist.

5. Polyurethan-Polyacrylat-Hybriddispersion gemäß Anspruch 1 enthaltend ein Polymerisat aufgebaut aus 20 - 100 Gew.-% (bezogen auf das Polymerisat) Acrylsäure, Methacrylsäure sowie deren Ester und 80 - 0 Gew.-% (bezogen auf das Polymerisat) Styrol mit einer Säurezahl (bezogen auf das Polymerisat) von weniger als 10 mg KOH/ g und einer OH-Zahl (bezogen auf den Gesamt-Festgehalt)von 0 - 120 mg KOH/ g.

6. Verwendung einer Polyurethan-Polyacrylat-Hybriddispersion gemäß Anspruch 1 in Kombination mit hydrophoben, freie Isocyanatgruppen enthaltenden Vernetzerharzen für Beschichtungen.

7. Verwendung einer Polyurethan-Polyacrylat-Hybriddispersion gemäß Anspruch 1 in Kombination mit hydrophilierten, freie Isocyanatgruppen enthaltenden Vernetzerharzen für Beschichtungen.

8. Verwendung einer Polyurethan-Polyacrylat-Hybriddispersion gemäß Anspruch 1 für die Holzbeschichtung.

9. Verwendung einer Polyurethan-Polyacrylat-Hybriddispersion gemäß Anspruch 1 für die Kunststoffbeschichtung.

10. Verwendung einer Polyurethan-Polyacrylat-Hybriddispersion gemäß Anspruch 1 für die industrielle Möbellackierung.

11. Verwendung einer Polyurethan-Polyacrylat-Hybriddispersion gemäß Anspruch 1 für die Parkettlackierung.

## Claims

1. Polyurethane-polyacrylate hybrid dispersion containing allophanate groups, comprising
A) 20-99% by weight (based on the total solids content) of an ionically and/or nonionically hydrophilized polyurethane based on aliphatic or cycloaliphatic polyisocyanates with allophanate groups and
B) 80-1% by weight (based on total solids content) of a vinyl polymer prepared in the presence of the polyurethane dispersion A by the method of free-radical emulsion polymerization
and also water and optionally an organic solvent, the components A and B adding to make 100% by weight.

2. Polyurethane-polyacrylate hybrid dispersion containing allophanate groups according to Claim 1, **characterized in that** the polyurethane dispersion A) is prepared from
A1) an aliphatic or cycloaliphatic polyisocyanate component having an allophanate group content of 5-35% (calculated as weight fraction of the allophanate group 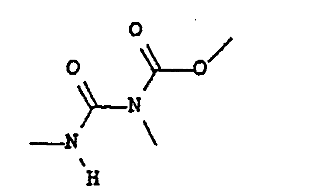 [molar weight 101 g] relative to the total initial mass of the polyisocyanate component),
A2) a component containing active hydrogen, comprising at least one polymeric compound having an OH number of 30-200 mg KOH/g and a molecular weight in the range of 400-6000,
A3) optionally one or more low molecular weight polyols and/or polyamines having an average molecular weight below 400,
A4) a component containing active hydrogen and at least one ionic or potentially ionic group.

3. Polyurethane-polyacrylate hybrid dispersion containing allophanate groups according to Claim 1, **characterized in that** the polyurethane dispersion A) is prepared from
A1) an aliphatic or cycloaliphatic polyisocyanate component having an allophanate group content of 11-27% (calculated as weight fraction of the allophanate group 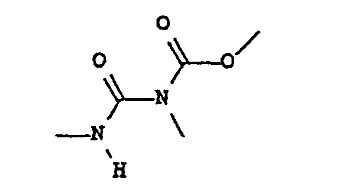 [molar weight 101 g] relative to the total initial mass of the polyisocyanate component),
A2) a component containing active hydrogen, comprising at least one polymeric compound having an OH number of 30-200 mg KOH/g and a molecular weight in the range of 400-6000,
A3) optionally one or more low molecular weight polyols and/or polyamines having an average molecular weight below 400,
A4) a component containing active hydrogen and at least one ionic or potentially ionic group.

4. Polyurethane-polyacrylate hybrid dispersion according to Claim 1, **characterized in that** the polymeric compound A2) is a polyester, polyether or polycarbonate with a molar mass of 650-2500 and a functionality of 1.9-3.

5. Polyurethane-polyacrylate hybrid dispersion according to Claim 1 comprising an addition polymer synthesized from 20-100% by weight (based on the addition polymer) of acrylic acid, methacrylic acid and also their esters and 80-0% by weight (based on the addition polymer) of styrene and having an acid number (based on the addition polymer) of less than 10 mg KOH/g and an OH number (based on the total solids content) of 0-120 mg KOH/g.

6. Use of a polyurethane-polyacrylate hybrid dispersion according to Claim 1, in combination with hydrophobic crosslinker resins containing free isocyanate groups for coatings.

7. Use of a polyurethane-polyacrylate hybrid dispersion according to Claim 1, in combination with hydrophilicized crosslinker resins containing free isocyanate groups for coatings.

8. Use of a polyurethane-polyacrylate hybrid dispersion according to Claim 1 for coating wood.

9. Use of a polyurethane-polyacrylate hybrid dispersion according to Claim 1 for coating plastic.

10. Use of a polyurethane-polyacrylate hybrid dispersion according to Claim 1 for the industrial coating of furniture.

11. Use of a polyurethane-polyacrylate hybrid dispersion according to Claim 1 for the coating of wood-block flooring.

## Revendications

1. Dispersion hybride de polyuréthanne-polyacrylate à groupes allophanate consistant en
A) 20 à 99 % en poids (sur les matières solides totales) d'un polyuréthanne hydrophilisé ionique et/ou non ionique à base de polyisocyanates aliphatiques ou cycloaliphatiques à groupes allophanate et
B) 80 à 1 % en poids (sur les matières solides totales) d'un polymère vinylique qui est préparé par la technique de polymérisation radicalaire en émulsion en présence de la dispersion de polyuréthanne A, de l'eau et le cas échéant un solvant organique, étant précisé que les proportions des composants A et B s'additionnent à 100 % en poids.

2. Dispersion hybride de polyuréthanne-polyacrylate à groupes allophanate selon la revendication 1, **caractérisée en ce que** la dispersion de polyuréthanne A est préparée à partir de
A1) un composant polyisocyanate aliphatique ou cycloaliphatique à une teneur en groupes allophanate de 5 à 35 % (il s'agit de la proportion en poids des groupes allophanate, 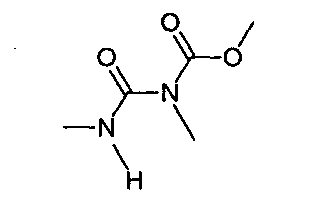 [poids moléculaire 101 g], par rapport au poids total du composant polyisocyanate),
A2) un composant contenant de l'hydrogène actif, qui consiste en au moins un composé polymère d'indice d'OH 30 à 200 mg de KOH/g, à un poids moléculaire dans l'intervalle de 400 à 6000 ;
A3) le cas échéant un ou plusieurs polyols et/ou polyamines à bas poids moléculaire, c'est-à-dire à un poids moléculaire moyen inférieur à 400,
A4) un composant contenant de l'hydrogène actif et au moins un groupe ionique ou ionique potentiel.

3. Dispersion hybride de polyuréthanne-polyacrylate à groupes allophanate selon la revendication 1, **caractérisée en ce que** la dispersion de polyuréthanne A est préparée à partir de
A1) un composant polyisocyanate aliphatique ou cycloaliphatique à une teneur en groupes allophanate de 11 à 27 % (il s'agit de la proportion en poids des groupes allophanate, 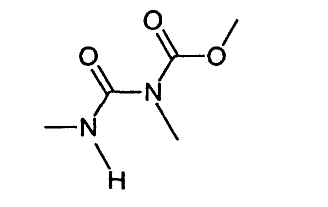 poids moléculaire 101 g, sur le poids total du composant polyisocyanate),
A2) un composant contenant de l'hydrogène actif et qui consiste en au moins un composé polymère d'indice d'OH 30 à 200 mg de KOH/g, avec un poids moléculaire dans l'intervalle de 400 à 6000 ;
A3) le cas échéant un ou plusieurs polyols et/ou polyamines à bas poids moléculaire, c'est-à-dire à un poids moléculaire moyen inférieur à 400 et
A4) un composant contenant de l'hydrogène actif et au moins un groupe ionique ou ionique potentiel.

4. Dispersion hybride de polyuréthanne-polyacrylate selon la revendication 1, **caractérisée en ce que** le composé polymère A2) est un polyester, polyéther ou polycarbonate de poids moléculaire 650 à 2500 et à une fonctionnalité de 1,9 à 3.

5. Dispersion hybride de polyuréthanne-polyacrylate selon la revendication 1, contenant un polymère préparé à partir de 20 à 100 % en poids (sur le poids du polymère) d'acide acrylique, d'acide méthacrylique ou leurs esters et 80 à 0 % en poids (par rapport au polymère) de styrène, à un indice d'acide (relatif au polymère) inférieur à 10 mg de KOH/g et un indice d'OH (relatif aux matières solides totales) de 0 à 120 mg de KOH/g.

6. Utilisation de la dispersion hybride de polyuréthanne-polyacrylate selon la revendication 1 en combinaison avec des résines réticulantes hydrophobes, contenant des groupes isocyanate libres, pour l'application de revêtements.

7. Utilisation d'une dispersion hybride de polyuréthanne-polyacrylate selon la revendication 1 en combinaison avec des résines réticulantes hydrophilisées, contenant des groupes isocyanate libres, pour l'application de revêtements.

8. Utilisation d'une dispersion hybride de polyuréthanne-polyacrylate selon la revendication 1 pour le revêtement du bois.

9. Utilisation d'une dispersion hybride de polyuréthanne-polyacrylate selon la revendication 1 pour le revêtement de résines synthétiques.

10. Utilisation d'une dispersion hybride de polyuréthanne-polyacrylate selon la revendication 1 pour le revêtement industriel de meubles.

11. Utilisation d'une dispersion hybride de polyuréthanne-polyacrylate selon la revendication 1 pour le revêtement de parquets.
